# EUROPÄISCHE PATENTSCHRIFT

(11) **EP 0 568 775 B1**
(45) Veröffentlichungstag und Bekanntmachung des Hinweises auf die Patenterteilung: **01.04.1998**
(21) Anmeldenummer: 93102372.5
(22) Anmeldetag: 16.02.1993
(51) Int. Cl.: B66F 9/075

(54) **Plattform für die Standfläche eines stehenden Fahrers eines Flurförderzeugs**
Supporting platform for a driver standing upright on a lifting truck
Plate-forme de support d'un conducteur restant debout sur un chariot élévateur

(30) Priorität: 04.05.1992 DE 4214788
(43) Veröffentlichungstag der Anmeldung: 10.11.1993
(73) Patentinhaber: Jungheinrich Aktiengesellschaft, 22047 Hamburg (DE)
(72) Erfinder: Prehn, Volkmar, Dipl.-Ing., W-2000 Norderstedt (DE)
(74) Vertreter: Patentanwälte Hauck, Graalfs, Wehnert, Döring, Siemons

(56) Entgegenhaltungen:
- EP-A- 0 485 257
- GB-A- 2 024 113
- US-A- 3 357 717
- US-A- 4 126 202
- US-A- 4 392 546

## Beschreibung

Die Erfindung bezieht sich auf ein Flurförderzeug mit einer Standfläche für einen stehenden Fahrer nach dem Oberbegriff des Patentanspruchs 1.

Flurförderzeuge besitzen in der Regel starre, ungefederte Fahrwerke und Vollkunststoffräder, so daß Fahrbahnstöße fast ungedampft bis zum Fahrer weitergegeben werden. Für sitzende Fahrer sind deshalb gefederte Sitze aus Komfort- und und Gesundheitsgründen allgemein üblich.

Aus US 3 357 717 ist bekanntgeworden, eine Standfläche in Form einer versteiften Blechplatte über ein vertikales Bauteil mit der Unterseite eines Fahrersitzes für einen Traktor zu verbinden, wobei die Unterseite über ein geeignetes Torsionsfedersystem fahrzeugfest abgestützt ist. Das in Fahrtrichtung vordere Ende der Plattform ist über zwei Schraubenfedern ebenfalls fahrzeugfest abgestützt. Für ein Flurförderzeug, bei dem der Fahrer ausschließlich auf einer Plattform steht, ist die bekannte Standfläche nicht geeignet.

Der Erfindung liegt daher die Aufgabe zugrunde, ein Flurförderzeug mit einer Standfläche für einen stehenden Fahrer zu schaffen, welche auf einfache Weise und mit einfachen Mitteln eine Dampfung von Erschütterungen bewirkt.

Diese Aufgabe wird erfindungsgemäß gelöst durch die Merkmale des Patentanspruchs 1.

Bei der Erfindung weist die Standfläche eine Plattform in Form einer versteiften Blechplatte auf, die begrenzt höhenbeweglich gelagert und am in Fahrtrichtung des Flurförderzeugs hinteren Ende durch mindestens ein elastisch nachgebendes Pufferelement abgestützt ist. Das Pufferelement wird vorzugsweise aus Gummi oder einem ähnlichen Material gefertigt und kann nach einer Ausgestaltung der Erfindung Kegelform aufweisen, um die Blechplatte vorzugsweise an einem Ende federnd gedämpft abzustützen.

Durch die gedämpfte Abstützung der Blechplatte an dem in Fahrtrichtung hinteren Ende liegt der größere Federweg der Blechplatte im Bereich des Absatzes des Fahrers, was den anatomischen Gegebenheiten und dem Ziel optimaler Dämpfung entgegenkommt.

Damit die Blechplatte sich während der Erschütterungen nicht verwirft, vielmehr eine einheitliche Schwenkbewegung erhalten wird, sieht eine Ausgestaltung der Erfindung vor, daß die Blechlatte am abgestützten Rand einen umgekehrt L-förmig oder U-förmig abgekanteten Abschnitt aufweist, mit dem das Pufferelement zusammenwirkt. Vorzugsweise ist der abgekantete Abschnitt gegenüber der Oberseite der Platte erhaben, so daß ausreichend Platz geschaffen ist für die Unterbringung eines oder mehrerer Pufferelemente und die Blechplatte bzw. die Plattform die übliche Höhe relativ zum Fahrzeug beibehalten kann.

Bei der Erfindung ist die Blechplatte mit einem flexiblen Abschnitt fest auf einem fahrzeugfesten Teil angebracht, vorzugsweise durch Verschraubung. Wird das Material der Blechplatte relativ dünn gewählt, beispielsweise 1 mm, weist sie eine ausreichende Flexibilität auf, um eine Verschwenkung der Blechplatte bei Stößen und Erschütterungen zu gewährleisten. Die ansonsten gewünschte Steifigkeit der Blechplatte wird durch die bereits erwähnte Abkantung am gegenüberliegenden Ende und nach einer weiteren Ausgestaltung der Erfindung auch an den anderen Endkanten erreicht. Es versteht sich, daß auch Sickungen vorgenommen werden können, um der Platte die gewünschte Steifigkeit zu verleihen.

Damit der Fahrer einen rutschfesten Stand erhält, sieht eine weitere Ausgestaltung der Erfindung vor, daß auf der Blechplatte ein rutschfester Belag aus Gummi oder Kunststoff angebracht ist.

Die erfindungsgemäße Plattform schützt den stehenden Fahrer vor den Stößen, die beim Überfahren von unregelmäßigen und schadhaften Böden entstehen. Dieser Vorteil wird mit technisch einfachsten Mitteln erhalten.

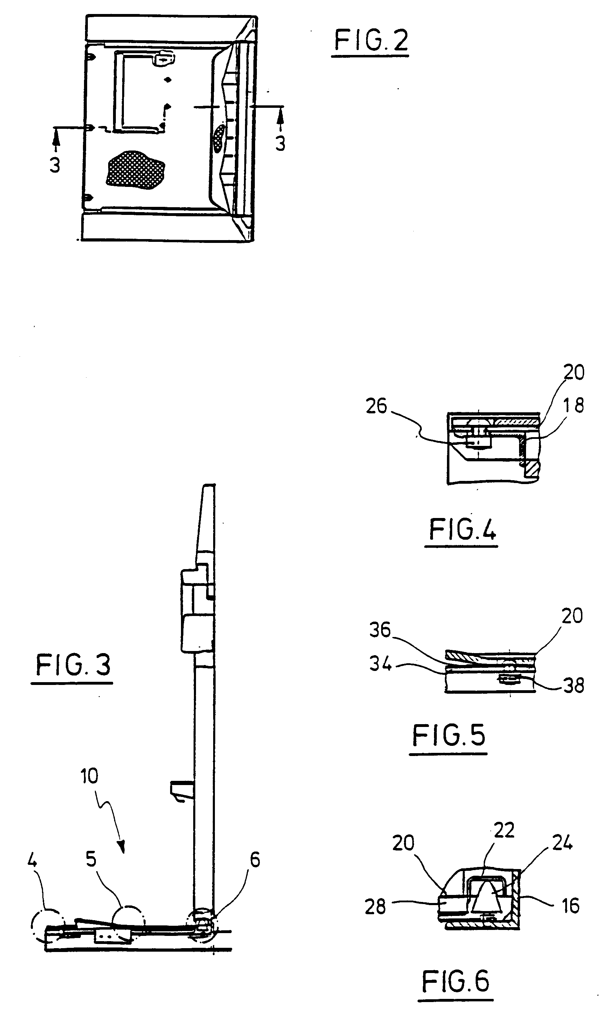

Die Erfindung wird nachfolgend anhand von Zeichnungen näher erläutert.
- Fig. 1: zeigt perspektivisch eine Standplattform für ein Flurförderzeug nach der Erfindung.
- Fig. 2: zeigt eine Draufsicht auf die Plattform nach Fig. 1
- Fig. 3: zeigt einen Schnitt durch die Darstellung nach Fig. 1 entlang der Linie 3-3.
- Fig. 4: zeigt vergrößert die Einzelheit 4 der Darstellung nach Fig. 3.
- Fig. 5: zeigt vergrößert die Einzelheit 5 der Darstellung nach Fig. 3.
- Fig. 6: zeigt vergrößert die Einzelheit 6 der Darstellung nach Fig. 3.
Eine Stehplattform 10 eines nicht weiter gezeigten Flurförderzeugs, beispielsweise eines Kommissionierers, weist horizontale parallel beabstandete umgekehrt L-förmige Profile 12, 14 auf, die in geeigneter Weise mit dem Fahrzeugrahmen verbunden sind. Am hinteren Ende sind die Profile 12, 14 durch ein L-förmiges Profil 16 miteinander verbunden (siehe auch Fig. 6). Am vorderen Ende sind sie durch ein L-Profil 18 miteinander verbunden (siehe auch Fig. 4). Zwischen den genannten Profilen 12, 14, 16 und 18 ist eine Blechplatte 20 relativ geringer Dicke, beispielsweise 1 mm, angeordnet. Sie weist am in Fahrtrichtung hinteren Ende einen umgekehrt U-förmig gekanteten Abschnitt 22 auf, der sich oberhalb der Ebene der Blechplatte 20 erstreckt und einen Aufnahmekanal bildet. Im waagerechten Steg des L-Profils 16 sind Öffnungen 24α vorgesehen, in denen kegelförmige Gummikörper 24 aufgenommen werden können. Sie greifen, wie in Fig. 6 zu erkennen ist, in den Aufnahmekanal des abgekanteten Abschnitts 22 ein und stützen mithin die Platte 20 am hinteren Ende federnd gedämpft ab.

Am vorderen Ende ist die Platte 20 mittels Schrauben 26 am Profil 18 befestigt (siehe Fig. 4). An den anderen Seiten ist die Platte 20 mit einer nach unten weisenden Abkantung versehen, wie bei 28 bzw. 30 dargestellt.

Auf der Blechplatte 20 liegt ein Belag 32 aus einem rutschfesten Material, beispielsweise Gummi oder Kunststoff. Er ist im Bereich der Abkantungen 22, 28 und 30 sowie im Bereich der Schrauben 26 ausgespart.

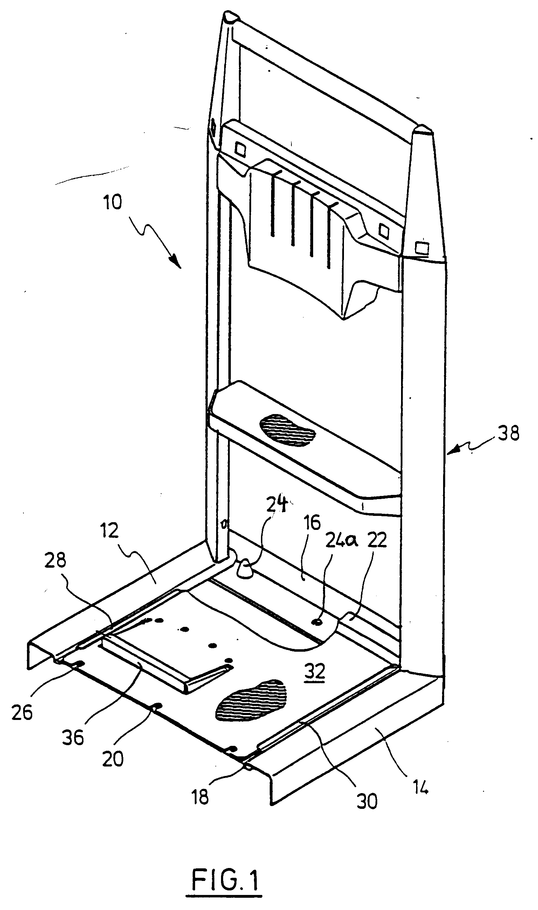

Wie aus Fig. 5 zu ersehen, ist die Blechplatte 20 in einem Bereich 34 ausgespart. Ein aus Blech geformter Pedalabschnitt 36 ist mittels Schrauben 38 (siehe Figuren 1 und 5) an der Oberseite der Blechplatte 20 befestigt. Der Pedalabschnitt erstreckt sich rampenartig nach vorn und dient zur Betätigung eines Schalters, der sicherstellt, daß ein Antrieb des Fahrzeugs unterbleibt, wenn der Fahrer nicht auf das Pedal 36 tritt.

Der vertikale Plattformbereich 38, der mit den Profilen 12, 14 verbunden ist, bildet eine Rückenlehne für den Fahrer. Da dieser Teil für die Erfindung ohne Bedeutung ist, wird er im einzelnen nicht beschrieben.

Wie erkennbar, ist die Platte 20 am vorderen Ende durch die Flexibilität des Materials schwenkbar gelagert und kann sich nach Maßgabe des Nachgebens der Pufferelemente 16 durch eine Schwenkbewegung auf- und abbewegen, um den Fahrer gegenüber Erschütterungen zu bewahren. Es ist auch denkbar, die Platte mittels eines Scharniers am vorderen Ende schwenkbar zu lagern.

## Patentansprüche

1. Flurförderzeug mit einer Standfläche für einen stehenden Fahrer, die eine Plattform in Form einer versteiften Blechplatte (20) aufweist, die begrenzt höhenbeweglich gelagert und durch mindestens ein elastisch nachgebendes Pufferelement (24) fahrzeugfest abgestützt ist und eine rutschfeste Oberfläche (32) aufweist, dadurch gekennzeichnet, daß die versteifte Blechplatte (20) an dem in Fahrtrichtung des Flurförderzeugs vorderen Ende mit einem flexiblen Abschnitt fest mit einem fahrzeugfesten Teil (18) verbunden ist, vorzugsweise durch Verschraubung (26), und das Pufferelement (24) die Blechplatte (20) am hinteren Ende abstützt.

2. Flurförderzeug nach Anspruch 1, dadurch gekennzeichnet, daß die Blechplatte (20) am abgestützten Rand einen umgekehrt L-förmig oder U-förmig abgekanteten Abschnitt (22) aufweist und das Pufferelement (24) mit dem abgekanteten Abschnitt (22) zusammenwirkt.

3. Flurförderzeug nach Anspruch 1 oder 2, dadurch gekennzeichnet, daß die Blechplatte (20) an den anderen beiden Enden eine vorzugsweise nach unten gerichtete Abkantung (28, 30) aufweist.

4. Flurförderzeug nach einem der Ansprüche 1 bis 3, dadurch gekennzeichnet, daß das Pufferelement (24) ein kegelförmiger Körper aus Gummi ist, der in einer Öffnung (24) eines fahrzeugfesten Teils (16) fixiert ist.

5. Flurförderzeug nach einem der Ansprüche 1 bis 4, dadurch gekennzeichnet, daß auf der Blechplatte (20) ein rutschfester Belag (32) aus Gummi oder Kunststoff angebracht ist.

## Claims

1. A ground conveying vehicle comprising a stand surface for a standing driver, the stand surface including a platform in form of a stiffened plate (20) of sheet material, the plate being supported to be lifted within limits by at least one resilient buffer element (24) mounted to the vehicle, the plate having a non-skid surface (32), characterized in that the stiffened sheet plate (20) with the front end of the plate if looking in driving direction of the vehicle is connected to a vehicle-firm portion (17) by a flexible portion, preferably by a threaded connection (26), and the buffer element (24) supports the rear end of the sheet plate (20).

2. The vehicle of claim 1, characterized in that the sheet plate (20) at the supported edge of the plate (20) has an L-shaped or U-shaped folded portion (20) and the buffer element (24) co-operates with the folded portion (22).

3. The vehicle of claim 1 or 2, characterized in that at both other ends the sheet plate (20) have a folding (28, 30) preferably downwardly facing.

4. The vehicle of one of the claims 1 to 3, characterized in that the buffer element (24) is a cone-shaped body of rubber which is attached in an opening (24) of the vehicle firm portion (16).

5. The vehicle of one of the claims 1 to 4, characterized in that a non-skid surface (32) of rubber or plastic material is attached to the sheet plate (20).

## Revendications

1. Chariot de manutention comportant un emplacement pour conducteur debout, qui présente une plateforme sous la forme d'une plaque de tôle (20) rigidifiée, montée mobile en hauteur de façon limitée, et prenant appui solidairement avec le véhicule par l'intermédiaire d'au moins un élément formant tampon (24) cédant élastiquement, et présentant une surface supérieure antidérapante (32), caractérisé en ce qu'à son bord avant dans le sens de marche du véhicule, la plaque de tôle (20) rigidifiée est, avec une partie élastique, reliée de façon fixe à une pièce (18) solidaire du véhicule, de préférence par vissage (26), et en ce qu'à son bord arrière, l'élément formant tampon (24) donne appui à la plaque de tôle (20).

2. Chariot de manutention suivant la revendication 1, caractérisé en ce que la plaque de tôle (20) présente, sur son bord en appui, une partie (22) repliée en forme de L ou de U inversé, et en ce que l'élément formant tampon (24) coopère avec la partie (22) repliée.

3. Chariot de manutention suivant la revendication 1 ou la revendication 2, caractérisé en ce que la plaque de tôle (20) présente, à ses deux autres bords, une aile repliée, de préférence, vers le bas (28, 30).

4. Chariot de manutention suivant l'une des revendication 1 à 3, caractérisé en ce que l'élément formant tampon (24) est un corps conique en caoutchouc, qui est bloqué dans une ouverture (24a) d'une pièce (16) solidaire du véhicule.

5. Chariot de manutention suivant l'une des revendications 1 à 4, caractérisé en ce que, sur la plaque de tôle (20), est appliqué un revêtement antidérapant (32) en caoutchouc ou en matière plastique.
